# EUROPÄISCHE PATENTANMELDUNG

(11) **EP 1 415 529 A1**
(43) Veröffentlichungstag der Anmeldung: **06.05.2004**
(21) Anmeldenummer: 03103526.4
(22) Anmeldetag: 24.09.2003
(51) Int. Cl.: A01D 45/02

(54) **Einzugs- und Pflückeinrichtung**

(30) Priorität: 04.10.2002 DE 10246419
(71) Anmelder: Maschinenfabrik Kemper GmbH & Co. KG, 48973 Stadtlohn (DE)
(72) Erfinder: Resing, Alfons, 48703, Stadtlohn (DE); Wuebbels, Richard, 46414, Rhede (DE)
(74) Vertreter: Holst, Sönke, Dr.

(57) **Zusammenfassung**

Die Erfindung bezieht sich auf eine Einzugs- und Pflückeinrichtung (10) mit einem um eine etwa vertikale Achse in Drehung versetzbaren Einzugselement (12), das zum Erfassen von Teilen, insbesondere Stängeln, von Pflanzen und zum Transportieren der Pflanzen entlang eines Pflückspaltes (18) einer Pflückeinrichtung eingerichtet ist.

Es wird vorgeschlagen, dass der Pflückspalt (18) derart gekrümmt ist, dass er entlang seiner wirksamen Länge einen im Wesentlichen konstanten Abstand von der Drehachse des Einzugselements (12) aufweist.

## Beschreibung

Die Erfindung betrifft eine Einzugs- und Pflückeinrichtung mit einem um eine etwa vertikale Achse in Drehung versetzbaren Einzugselement, das zum Erfassen von Teilen, insbesondere Stängeln, von Pflanzen und zum Transportieren der Pflanzen entlang eines Pflückspaltes einer Pflückeinrichtung eingerichtet ist.

In der DE 101 53 198 A wird eine Einzugs- und Pflückeinrichtung eingangs genannter Art beschrieben. Ein Einzugselement ist um eine etwa vertikale Achse drehbar und mit Mitnehmern versehen, die dazu dienen, Pflanzenstängel in einen Pflückspalt einzuführen und über seine Länge zu transportieren. Unterhalb des Pflückspalts, der sich in einem Abstreifblech befindet, sind zwei Pflückwalzen angeordnet. Der Pflückspalt ist fast über seine gesamte Länge gerade, nur am Ende ist er in Richtung auf die Drehachse des Einzugselements zu gekrümmt und stromauf seines Einlaufbereichs erweitert er sich trichterförmig. Bei der Ernte erfasst das Einzugselement die auf einem Feld stehenden Pflanzen mit seinen etwa radial orientierten Mitnehmern und transportiert sie zunächst seitlich und dann nach hinten in den Pflückspalt hinein. Am Einlauf- und Endbereich des Pflückspalts schließt die vorlaufende Oberfläche des Mitnehmers mit dem Pflückspalt einen Winkel von etwa 45° ein, während sie im Mittelbereich des Pflückspalts etwa orthogonal zum Pflückspalt steht. Dadurch ergeben sich am Einlauf- und Endbereich des Pflückspalts eine Relativbewegung und spitze Winkel zwischen den Pflanzen und der Oberfläche des Mitnehmers, die zu reibungsbedingtem Verschleiß und Transportproblemen führen können.

Die der Erfindung zu Grunde liegende Aufgabe wird darin gesehen, eine verbesserte Einzugs- und Pflückeinrichtung bereitzustellen, bei der die beschriebenen Nachteile vermieden werden.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Es wird vorgeschlagen, den Pflückspalt bogenförmig gekrümmt um die Drehachse des Einzugselements herum anzuordnen. Über seine wirksame Länge, über die das Einzugselement mit den Pflanzen zusammenwirkt, weist er somit einen im Wesentlichen konstanten Abstand von der Drehachse des Einzugselements auf.

Auf diese Weise erreicht man, dass während des Pflückvorgangs keine oder zumindest reduzierte Relativbewegungen zwischen den Pflanzen und dem Einzugselement auftreten. Die Reibung und die Transportprobleme treten nur noch in einem verminderten Maß auf.

Es bietet sich an, das Einzugselement in an sich bekannter und bewährter Weise mit Mitnehmern zu versehen, die mehr oder weniger radial zur Drehachse des Einzugselements orientiert sind. Aufgrund der erfindungsgemäßen Anordnung des Pflückspalts ergibt sich ein stumpfer oder sogar ein rechter Winkel zwischen der Oberfläche des Mitnehmers, an dem die Pflanzen anliegen, und der Bewegungsrichtung der Pflanzenstängel entlang des Pflückspalts. Es treten somit keine Kräfte in seitlicher Richtung mehr auf, die die Pflanzen verbiegen und zu Transportproblemen führen können.

Der Pflückspalt muss nicht unbedingt über seine gesamte Länge in einem konstanten Abstand von der Drehachse des Einzugselements angebracht sein. In seinem Endbereich, den die Pflanzen erst erreichen, wenn sie fast vollständig nach unten in den Pflückspalt eingezogen wurden, kann er einen größeren Abstand von der Drehachse des Einzugselements aufweisen als seine übrigen Teile, d. h. nach außen abbiegen. Dadurch erreicht man, dass die obersten Pflanzenteile aus dem Wirkbereich des Einzugselements gelangen. Sie werden dann nicht mehr durch das Einzugselement weiter gefördert, sondern bleiben stationär und werden nach unten durch den Pflückspalt eingezogen.

Zum Einziehen der Pflanzen ist oder sind vorzugsweise eine oder zwei Pflückwalzen vorhanden, die unterhalb des Pflückspalts angeordnet ist bzw. sind. Wird eine einzige Pflückwalze verwendet, wirkt sie in der Regel mit einer festen Oberfläche zusammen, während zwei Pflückwalzen gegensinnig angetrieben werden und die Pflanzenstängel zwischen sich einziehen. Der Einlaufbereich des Pflückspalts befindet sich zweckmäßigerweise oberhalb der Einlaufzone der Pflückwalze oder Pflückwalzen, d. h. ihres Bereichs, der zuerst mit den Pflanzen in Berührung kommt. Der Vorteil ist, dass die Pflanzen an dieser kritischen Stelle vertikal orientiert bleiben, so dass es nicht zu Problemen beim Einführen der Pflanzen in den Pflückspalt und in die Einlaufzone der Pflückwalze oder Pflückwalzen kommt. Stromab des Einlaufbereichs entfernt sich der Pflückspalt in der Regel sukzessive von den Pflückwalzen, so dass die Pflanzen in seitlicher Richtung verbogen werden können, was aber grundsätzlich unproblematisch ist.

In den Zeichnungen ist ein nachfolgend näher beschriebenes Ausführungsbeispiel der Erfindung dargestellt. Es zeigt:
- Fig. 1: eine Draufsicht auf eine erfindungsgemäße Einzugs- und Pflückeinrichtung, und
- Fig. 2: eine seitliche Ansicht einer erfindungsgemäßen Einzugs- und Pflückeinrichtung.

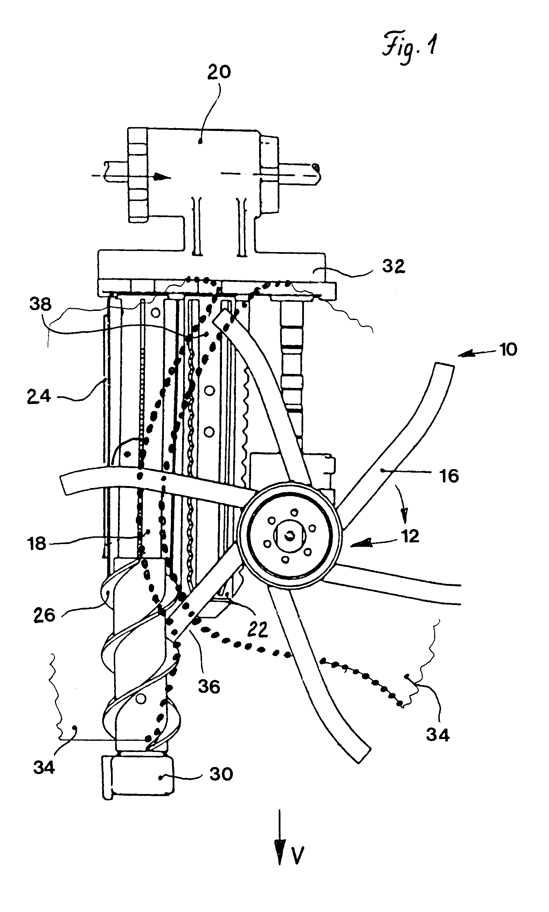

In der Figur 1 ist eine Einzugs- und Pflückeinrichtung 10 perspektivisch dargestellt. Ein Erntegerät umfasst eine Anzahl an jeweils gleichartigen, seitlich nebeneinander angeordneten Einzugs- und Pflückeinrichtungen 10, die durch einen an ihrer Rückseite angeordneten, nicht zeichnerisch dargestellten Träger untereinander verbunden sind. Beim Erntebetrieb wird der Träger am Schrägförderer eines Mähdrescher oder Einzugskanal eines Feldhäckslers angehängt und das Erntegerät über ein Feld bewegt. Im folgenden beziehen sich Richtungsangaben, wie vorn, hinten, unten und oben auf die Vorwärtsrichtung V der Einzugs- und Pflückeinrichtung 10.

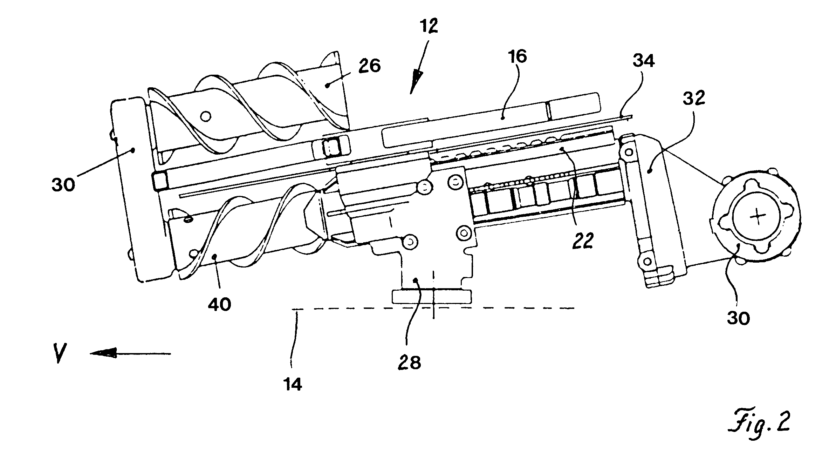

Die Einzugs- und Pflückeinrichtung 10 umfasst ein um eine etwa vertikal orientierte, aber geringfügig nach vorn geneigte Achse (s. Figur 2) in Drehung versetzbares Einzugselement 12 mit etwa radial nach außen abstehenden Mitnehmern 16, deren Endbereiche jeweils entgegen der Drehrichtung nachlaufend gekrümmt sind, um ein abweisendes Förderverhalten zu erzielen. Seitlich neben der Drehachse des Einzugselements 12 befindet sich ein Pflückspalt 18, unterhalb dem zwei zusammenwirkende Pflückwalzen 22, 24 angeordnet sind. Oberhalb des Pflückspalts 18 und oberhalb der Mitnehmer 16 ist auf der dem Förderelement 12 gegenüberliegenden Seite des Pflückspalts 18 ein oberer Schneckenförderer 26 angebracht, der schneller als ein im vorderen Bereich der darunter angeordneten Pflückwalze 24 vorgesehener unterer Schneckenförderer 40 fördert und das Einführen der Pflanzenstängel in den Pflückspalt 18 erleichtert. Die beweglichen Elemente werden durch geeignete Antriebe 20, 28 in Drehung versetzt, wobei der weitere Schneckenförderer 26 über die Pflückwalze 24 und ein Getriebe angetrieben wird, das an der Vorderseite der Pflückwalze 24 und des oberen Schneckenförderers 26 innerhalb eines Getriebegehäuses 30 angeordnet ist. Der Pflückspalt 18 befindet sich in einem etwa horizontalen Abstreifblech 34, das unterhalb der Mitnehmer 16 und oberhalb der Pflückwalzen 22, 24 angeordnet ist.

Ein Getriebegehäuse 32 haltert die einzelnen Elemente der Einzugs- und Pflückeinrichtung 10. Es ist seitlich verschiebbar am oben erwähnten Träger befestigt.

Der Pflückspalt 18 erstreckt sich, wie anhand der Figur 1 erkennbar ist, etwa kreisförmig um die Drehachse des Einzugselements 12. Der Abstand zwischen dem Pflückspalt 18 und der Drehachse des Einzugselements 12 ist über einen Winkelbereich von 90° stromab des Einlaufbereichs 36 des Pflückspalts 18 etwa konstant. Dieser Winkelbereich entspricht der wirksamen Länge des Pflückspalts 18, d. h. einer Länge, die Pflanzen normaler Höhe durchlaufen, bis sie von den Pflückwalzen 22, 24 nach unten eingezogen sind. In seinem rückwärtigen Endbereich 38 erstreckt sich der Pflückspalt 18 jedoch demgegenüber weiter nach außen; er ist von der Drehachse des Einzugselements 12 hinweg abgewinkelt. Haben größere Pflanzen den Endbereich 38 erreicht, werden sie somit nicht mehr durch die Mitnehmer 16 transportiert. Sie werden dort durch die Pflückwalzen 22, 24 nach unten eingezogen. Die demgegenüber kleineren Pflanzen sind jedoch schon nach unten eingezogen, bevor sie den Endbereich 38 erreicht haben. Der Pflückspalt erweitert sich stromauf des Einlaufbereichs 36 trichterförmig, damit auch Pflanzen, die in der Vorwärtsrichtung V nicht genau vor dem Einlaufbereich 36 stehen, in den Pflückspalt 18 gelangen. Die Einlaufzone der Pflückwalzen 22, 24, die durch die vordere Spitze der Pflückwalze 22 und das hintere Ende des Schneckenförderers 40 der Pflückwalze 24 definiert wird, ist unterhalb des Einlaufbereichs 36 angeordnet.

Die auf dem Feld stehenden, stängelartigen Pflanzen (z. B. Mais oder Sonnenblumen) werden bei der Ernte durch das Einzugselement 12 der erfindungsgemäßen Einzugs- und Pflückeinrichtung 10 gegebenenfalls seitlich abgelenkt und erreichen, geführt durch die gekrümmte Vorderkante des Abstreifblechs 34 und den sich stromauf des Einlaufbereichs 36 trichterförmig erweiternden Pflückspalt 18 den Einlaufbereich 36. Dort verbringt ein Mitnehmer 16 den Pflanzenstängel in den Pflückspalt 18 und in die darunter gelegene Einlaufzone der Pflückwalzen 22, 24. Die Pflanze bleibt somit etwa vertikal stehen.

Die Pflanzen werden durch die Pflückwalzen 22, 24 nach unten in den Pflückspalt 18 eingezogen und durch die Mitnehmer 16 entlang des Pflückspalts 18 transportiert, wobei die Fruchtstände (Kolben o. dgl.) von den Pflanzen abgetrennt werden und beidseits des Pflückspalts 18 auf dem Abstreifblech 34 zu liegen kommen. Von dort werden sie durch die Mitnehmer 16 nach hinten abgefördert und durch eine nicht eingezeichnete Querförderschnecke in den Schrägförderer oder Einzugskanal des Erntefahrzeugs verbracht. Die Schlägel 14 zerteilen die Pflanzenstängel. Der Aufbau und die Funktion der Einzugs- und Pflückeinrichtungen 10 sind detaillierter in der DE 101 53 198 A offenbart, deren Offenbarung durch Verweis mit in die vorliegende Anmeldung aufgenommen wird.

Durch die erfindungsgemäße Krümmung des Pflückspalts 18 erreicht man, dass die Oberflächen der Mitnehmer 16 quer zum Pflückspalt 18 orientiert sind, wenn sie die Pflanzen entlang des Pflückspalts 18 transportieren. Außerdem ergibt sich wegen des über den wirksamen Bereich des Pflückspalts 18 konstanten Abstands zwischen der Drehachse des Einzugselements 12 und dem Pflückspalt 18 nur noch eine geringe Relativbewegung zwischen den Mitnehmern 16 und den daran anliegenden Pflanzen. Die Pflanze wird beim Transport entlang des Pflückspalts 18 zeitweilig (bezüglich der Figur 1 nach rechts) verbogen, da sich ihr unterer Teil zwischen den Pflückwalzen 22, 24 befindet, was sich jedoch nicht nachteilig bemerkbar macht.

## Patentansprüche

1. Einzugs- und Pflückeinrichtung (10) mit einem um eine etwa vertikale Achse in Drehung versetzbaren Einzugselement (12), das zum Erfassen von Teilen, insbesondere Stängeln, von Pflanzen und zum Transportieren der Pflanzen entlang eines Pflückspaltes (18) einer Pflückeinrichtung eingerichtet ist, **dadurch gekennzeichnet, dass** der Pflückspalt (18) derart gekrümmt ist, dass er entlang seiner wirksamen Länge einen im Wesentlichen konstanten Abstand von der Drehachse des Einzugselements (12) aufweist.

2. Einzugs- und Pflückeinrichtung (10) nach Anspruch 1, **dadurch gekennzeichnet, dass** das Einzugselement (12) mit etwa radial zu seiner Drehachse angeordneten Mitnehmern (16) versehen ist, die näherungsweise orthogonal zum Pflückspalt (18) orientiert sind.

3. Einzugs- und Pflückeinrichtung (10) nach Anspruch 1 oder 2, **dadurch gekennzeichnet, dass** ein Endbereich (38) des Pflückspalts (18) einen größeren Abstand von der Drehachse des Einzugselements (12) aufweist als der übrige Pflückspalt (18).

4. Einzugs- und Pflückeinrichtung (10) nach einem der Ansprüche 1 bis 3, **dadurch gekennzeichnet, dass** unterhalb des Pflückspalts (18) wenigstens eine Pflückwalze (22, 24) angeordnet ist, deren Einlaufzone sich unterhalb eines Einlaufbereichs (36) des Pflückspalts (18) befindet.
